# EUROPÄISCHE PATENTSCHRIFT

(11) **EP 3 308 944 B1**
(45) Veröffentlichungstag und Bekanntmachung des Hinweises auf die Patenterteilung: **14.04.2021**
(21) Anmeldenummer: 16194152.1
(22) Anmeldetag: 17.10.2016
(51) Int. Cl.: B29C 51/46, B29C 51/32, B29C 51/22, B29C 51/38

(54) **VERFAHREN UND VORRICHTUNG ZUM THERMOFORMEN**
METHOD AND APPARATUS FOR THERMOFORMING
PROCÉDÉ ET INSTALLATION POUR LE THERMOFORMAGE

(43) Veröffentlichungstag der Anmeldung: 18.04.2018
(73) Patentinhaber: Gabler Thermoform GmbH & Co. KG, 23568 Lübeck (DE)
(72) Erfinder: Rowedder, Axel, 23623 Ahrensbök (DE)
(74) Vertreter: Grosse, Wolf-Dietrich Rüdiger

(56) Entgegenhaltungen:
- EP-A1- 2 586 590
- WO-A1-03/052533
- DE-A1- 4 033 534
- JP-A- H0 639 452
- US-A1- 2009 243 132
- DATABASE WPI Week 201566 Thomson Scientific, London, GB; AN 2015-53224V XP002769012, -& CN 104 760 328 A (FOSHAN HENGLITAI MACHINERY CO LTD) 8. Juli 2015 (2015-07-08)
- DATABASE WPI Week 199922 Thomson Scientific, London, GB; AN 1999-259104 XP002769013, -& JP H11 77396 A (MURATA KIKAI KK) 23. März 1999 (1999-03-23)

## Beschreibung

Die Erfindung betrifft eine Vorrichtung zum Thermoformen nach dem Oberbegriff des Anspruchs 1. Die Erfindung betrifft zudem ein Verfahren zum Betrieb einer erfindungsgemäßen Vorrichtung mit den Merkmalen des Anspruchs 12.

EP 2 586 591 B1 beschreibt eine Thermoformmaschine, bei der ein dem Thermoformen folgender Stanzvorgang mittels Kraftsensoren vermessen wird.

Aus der EP 2 586 590 A1 ist ein Verfahren zum Betreiben einer Thermoformmaschine zum Ausformen von Artikeln aus Kunststoff gemäß Oberbegriff von Anspruch 1 bekannt. Das Verfahren umfasst das Messen wenigstens einer auf die Thermoformmaschine wirkenden Belastungsgröße.

Weiterer Stand der Technik ist aus den Dokumenten WO 03/052533 A1, US 2009/243132 A1, CN 104 760 328 A, JP H11 77396 A, JP H06 39452 A und DE 40 33 534 A1 bekannt.

Allgemein betrifft die Erfindung Vorrichtungen bzw. Maschinen zum Thermoformen von Kunststoff. Dabei werden Folien oder Platten aus thermoplastischem Material bei entsprechender Temperatur durch Werkzeuge zum einen umgeformt und zum anderen ausgestanzt, wobei die Vorgänge bevorzugt in demselben Arbeitsschritt erfolgen. Bei solchen Werkzeugen sind zweckmäßig neben den formgebenden Bereichen hochgenau gefertigte Schneiden zum Ausstanzen vorgesehen. Typische Produkte solcher Vorrichtungen sind alle Arten von Kunststoff-Verpackungsmaterial wie etwa Becher, Deckel, Schalen, Blister Verpackungen und Ähnliches.

Es ist die Aufgabe der Erfindung, eine Vorrichtung zum Thermoformen anzugeben, die eine möglichst hohe Lebensdauer von Werkzeug und Maschine ermöglicht.

Diese Aufgabe wird für eine eingangs genannte Vorrichtung erfindungsgemäß mit den kennzeichnenden Merkmalen des Anspruchs 1 gelöst. Durch die Positionsmessung des antreibbar bewegten Werkzeugs ist eine Kontrolle ermöglicht, die einen vorzeitigen Werkzeugverschleiß verhindern kann.

Dabei kann je nach Anforderungen die Positionsgenauigkeit des Werkzeugs nach einem Werkzeugwechsel oder auch die Positionsgenauigkeit während eines Produktionsablaufs überwacht werden. Bewegungen an einer Thermoformmaschine unterliegen einem Verschleiß, insbesondere wegen auftretender Stanzkräfte von 1000 KN und mehr und dem intermittierenden Betrieb von großen Massen in kurzer Zeit. Augenfällig wird der Verschleiß an Qualitätsmängeln der hergestellten Kunststoffprodukte. Die Schnittkanten der hergestellten Produkte werden mangelhaft. Gängige Praxis im Stand der Technik ist ein Nachschleifen der Werkzeugschneiden. Erfahrungsgemäß werden die Nachschleifintervalle des Werkzeugs über den Lebenszyklus der Maschine immer kürzer. Der Betrieb der Maschine mit zunächst stumpfen Schneiden, später dann mit verschlissenen Schneiden, lässt die Belastung der Maschine ansteigen, wodurch der Verschleiß an Maschine und Werkzeug dann wiederum überproportional ansteigt. Durch die erfindungsgemäße Positionsüberwachung können rechtzeitig Maßnahmen (Überholung der Antriebsvorrichtung o.ä.) ergriffen werden.

Unter einem Längenmesssensor wird im Sinne der Erfindung jeder Sensor verstanden, der in einem sinnvollen Intervall einen Positionswert für einen mit dem Werkzeug korrelierten Messpunkt liefert. Insbesondere handelt es sich dabei um eine unmittelbare Positionsmessung des Messpunktes. Dies schließt nicht aus, dass indirekte Positionsinformationen für das bewegte Werkzeug einer erfindungsgemäßen Vorrichtung aus einer Stellung der Antriebsvorrichtung, zum Beispiel durch Rückmeldung von Stellmotoren, abgeleitet werden können. Solche Informationen sind aber keine unmittelbare Positionsmessung im Sinne der Erfindung, da sie kritische Toleranzen im Antrieb, Verschleißeffekte oder auch Montagefehler der Werkzeuge nicht erfassen können.

Allgemein vorteilhaft umfasst ein Längenmesssensor eine Messfahne, die als Referenzpunkt in einer genau vorbestimmten Position angebracht ist. Die Messfahne kann insbesondere an dem bewegten Werkzeug selbst oder auch an dem bewegten Werkzeughalter angebracht sein. Der übrige Sensor ist dann an einem entsprechenden Gegenstück, zum Beispiel einem bewegten Tisch, einem Gestellrahmen der Vorrichtung oder Ähnliches angeordnet. Natürlich kann die Anordnung auch umgekehrt erfolgen.

Unter einer Schließposition des bewegten Werkzeugs wird im Sinne der Erfindung eine Position verstanden, bei der eine genaue Ausrichtung zum Zweck des Formens und/oder Stanzens mittels der Antriebsvorrichtung stattgefunden hat. Bevorzugt ist in dieser Position eine genaue Ausrichtung der Werkzeuge zueinander erreicht, sofern die Werkzeuge optimal justiert sind und die Antriebsvorrichtung in unverschlissenem Zustand ist.

Die Raumrichtung ist so gewählt, dass aus der Messung durch den Längenmesssensor ein Maß für eine Parallelität der Werkzeuge in der Schließposition resultiert.

Bei einer bevorzugten Ausführungsform der Erfindung ist es vorgesehen, dass die Schließposition einer Stanzposition entspricht, bevor ein thermogeformtes Werkstück mittels einer Schneide der Werkzeuge abgetrennt wird. Insbesondere kann es sich dabei um eine Position zu Beginn des Stanzvorgangs handeln, wenn eine Stanzbewegung noch nicht abgeschlossen ist. In dieser Position ist eine Ausrichtung von Schneiden der Werkzeuge besonders kritisch. Alternativ oder ergänzend kann es sich bei der Schließposition auch um eine Position unmittelbar zu Beginn eines Umformvorgangs handeln. Bei dieser Position treten noch keine größeren Kräfte zwischen den Werkzeugen auf, obgleich bereits die genaue Ausrichtung bereits erfolgt ist. Je nach Anforderungen können auch mehrere Schließpositionen im vorstehenden Sinn vermessen werden, um besonders umfangreiche Informationen zu erhalten.

Bei einer allgemein bevorzugten Weiterbildung ist es vorgesehen, dass über einen weiteren Längenmesssensor die Schließposition des bewegbaren Werkzeugs in einer weiteren Raumrichtung gemessen wird. Hierdurch können Montagefehler der Werkzeuge in mehreren Richtungen detektiert werden bzw. ein Verschleiß / ein Justageverlust der Antriebsvorrichtung kann in mehreren Ebenen kontrolliert werden.

Bei einer möglichen Ausführungsform der Erfindung wird über den Längenmesssensor die Schließposition des bewegbaren ersten Werkzeugs relativ zu dem zweiten Werkzeug gemessen. Hierdurch kann die Relativposition der beiden Werkzeuge in der Raumrichtung unmittelbar bestimmt werden, wodurch sich eine optimale Rückmeldung über die Qualität der Positionierung ergibt. Je nach baulicher Auslegung der Vorrichtung kann eine solche unmittelbare Messung der Relativposition der Werkzeuge aber aufwendig oder auch fehlerbehaftet sein.

Zur Erzielung einer möglichst vollständigen Positionsbestimmung im Raum können bei einer bevorzugten Detailgestaltung insgesamt wenigstens drei Längenmesssensoren vorgesehen sein, die jeweils unabhängige Positionsbestimmungen des bewegbaren ersten Werkzeugs in der Schließposition vornehmen. Insbesondere kann dabei wenigstens einer der Sensoren eine Relativposition zwischen erstem und zweitem Werkzeug oder Werkzeughalter unmittelbar messen.

Bei einer besonders bevorzugten Ausführungsform der Erfindung ist das erste Werkzeug an einem um eine Achse schwenkbaren Schwenktisch angeordnet, wobei der Schwenktisch an einem linear verschiebbar geführten Formtisch aufgenommen ist. Eine solche Anordnung hat sich bewährt, um durch die Schwenkung des Schwenktisches eine schnelle Entnahme des geformten Werkstücks zu erlauben. Die Verschwenkung um die Schwenkachse kann dabei insbesondere einen eigenen Antrieb aufweisen, der von einem Antrieb des linear bewegten Formtisches unabhängig ist. Ein Antriebsvorrichtung im Sinne der Erfindung wird als Gesamtheit der Antriebe zur Bewegung des ersten Werkzeugs verstanden.

In bevorzugter Weiterbildung wird dabei durch den Längenmesssensor eine Position des Schwenktisches relativ zu dem Formtisch gemessen. Hierbei wird mit dem Längenmesssensor das Abstandmaß zwischen Formtisch und Schwenktisch abgefragt. Verfahrensbedingt ist diese Position als besonders kritisch einzustufen, weil der Schwenktisch hinsichtlich kurzer Maschinenzykluszeit und somit hoher Ausstoßleistung schnell verfahren werden muss, weil die bewegten Massen sehr hoch sind, weil die Positionsgenauigkeit sehr hohen Ansprüchen unterliegt, weil der Werkzeugeinbau und dessen Ausrichtung hohe Fachkenntnisse des Betreibers erfordert, und weil zwischen Einrichten und Produktionsbetrieb durch dynamische Einflüsse mitunter andere Ist-Positionen auftreten.

Bei einer weiteren Ausführungsform kann es vorgesehen sein, dass das zweite Werkzeug ebenfalls in seiner Position einstellbar justierbar ist. Bevorzugt kann dies zum Beispiel zum Zweck einer Stanztiefenverstellung vorgesehen sein. In solch einem Fall ist eine unmittelbare Messung einer Relativposition der beiden Werkzeuge oder Werkzeughalter in der Schließposition mittels des Längenmesssensors besonders zweckmäßig.

Bei einer allgemein bevorzugten Variante ist eine Vorrichtung zur Verstellung einer Stanztiefe jedoch auf der Seite des mittels der Antriebsvorrichtung bewegbaren Werkzeugs angeordnet.

Bei weiteren Ausführungsformen der Erfindung kann die Vorrichtung als Flachbettmaschine ohne einen Schwenktisch ausgebildet sein. Hierbei tritt kein Verschwenken eines Werkzeugs um eine Achse auf. Grundsätzlich gelten die Verschleißprobleme einer Antriebsvorrichtung und Probleme der Genauigkeit einer Werkzeugmontage auch für solche Maschinen.

Allgemein vorteilhaft ist es vorgesehen, dass die Werkzeuge vor Erreichen der Schließposition mittels eng tolerierter Stummelführungen unmittelbar aneinander geführt sind. Dies erlaubt eine hochgenaue Führung in einem letzten Bewegungsabschnitt, insbesondere beim Stanzen. Die Schließposition wird dabei zweckmäßig so definiert, dass die Stummelführungen noch ausreichendes Spiel zueinander aufweisen. Hierdurch wird das Erkennen eines Positionsfehlers bzw. das Verlassen einer Positionstoleranz durch den Längenmesssensor ermöglicht, wobei zugleich noch eine beschädigungsfreie Zustellung der Werkzeuge mittels der Stummelführungen sichergestellt ist. Grundsätzlich ist es bisher üblich gewesen, das Verlassen von Positionstoleranzen durch beginnende Marken bzw. Abtrag an solchen Stummelführungen zu erkennen. Die Erfahrung mit modernen Werkzeugen mit hochpräzisen Schneiden zeigt allerdings, dass mit dem Erkennen solcher Marken bereits eine Schädigung des Werkzeugs einhergegangen ist. Hierbei kann die Kontrolle durch den Längenmesssensor rechtzeitige Warnung geben.

Eine zuverlässige und genaue Messung kann erreicht werden, wenn der Längenmesssensor ausgewählt ist aus der Gruppe induktiver Sensor, kapazitiver Sensor und Laser-Sensor. Besonders bevorzugt kann es sich um einen induktiven Sensor handeln. Solche Sensoren messen eine Länge zwar nur in einem relativ kleinen Intervall, bieten aber eine hohe Sensitivität gegenüber Längenänderungen.

Die Aufgabe der Erfindung wird zudem gelöst durch ein Verfahren zum Betrieb einer erfindungsgemäßen Vorrichtung, umfassend den Schritt:
Vermessen der Schließposition des bewegbaren ersten Werkzeugs mittels des Längenmesssensors.

Bei einer ersten bevorzugten Weiterbildung erfolgt dabei die Messung nach einem Werkzeugwechsel und vor einer Produktionsaufnahme, um eine Lagegenauigkeit des gewechselten Werkzeugs zu prüfen. Hier dient der Längenmesssensor einer Vorab-Kontrolle.

Alternativ oder ergänzend dazu erfolgt die Messung während einer Produktion mit der Vorrichtung, um eine Lagegenauigkeit der Werkzeuge zu überwachen. Hier dient der Längenmesssensor einer kontinuierlichen oder stichprobenartigen Kontrolle der Produktion.

Weitere Vorteile und Merkmale ergeben sich aus den nachfolgend beschriebenen Ausführungsbeispielen sowie aus den abhängigen Ansprüchen.

Nachfolgend werden drei bevorzugte Ausführungsbeispiele der Erfindung beschrieben und anhand der anliegenden Zeichnungen näher erläutert.
- Fig. 1: zeigt eine erfindungsgemäße Vorrichtung gemäß einem ersten Ausführungsbeispiel in einer Schließposition nebst einer Schnittansicht entlang der Linie A-A.
- Fig. 2: zeigt die Vorrichtung aus Fig. 1 in einer aufgeschwenkten Position.
- Fig. 3: zeigt eine erfindungsgemäße Vorrichtung gemäß einem zweiten Ausführungsbeispiel in einer Schließposition nebst einer Schnittansicht entlang der Linie A-A.
- Fig. 4: zeigt die Vorrichtung aus Fig. 3 in einer aufgeschwenkten Position.
- Fig. 5: zeigt eine erfindungsgemäße Vorrichtung gemäß einem dritten Ausführungsbeispiel in einer Schließposition nebst einer Schnittansicht entlang der Linie A-A.
- Fig. 6: zeigt die Vorrichtung aus Fig. 5 in einer aufgeschwenkten Position.

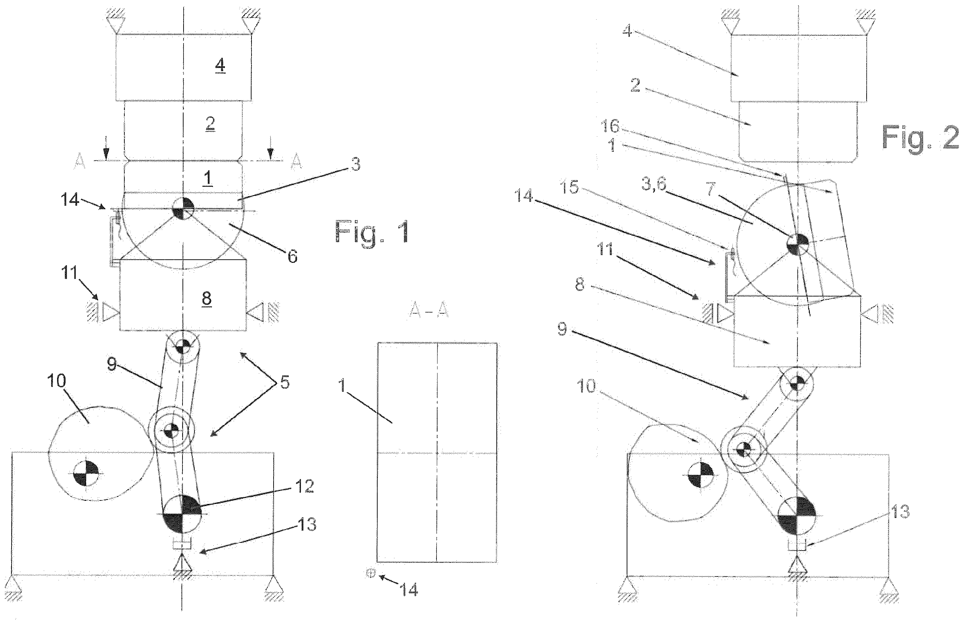

Die Vorrichtung gemäß dem ersten Ausführungsbeispiel nach Fig. 1 und Fig. 2 zeigt schematisch eine Maschine zum Thermoformen von Kunststofffolien. Sie umfasst ein erstes, bewegbares Werkzeug 1 nach Art eines Unterwerkzeugs und ein zweites, ortsfest gegenüber in einem Maschinengestell montiertes Werkzeug 2 nach Art eines Oberwerkzeugs. Die Werkzeuge 1, 2 sind jeweils in einem ersten bzw. einem zweiten Werkzeughalter 3, 4 montiert, so dass die Werkzeuge 1, 2 produktabhängig wechselbare Einheiten sind und die Werkzeughalter 3, 4 permanente Bestandteile der Vorrichtung sind.

Das erste Werkzeug 1 ist mittels einer Antriebsvorrichtung 5 relativ zu dem zweiten Werkzeug 2 antreibbar bewegbar. Hierzu ist der erste Werkzeughalter 3 Teil eines Schwenktisches 6, der um eine Achse 7 mittels eines separaten Motors (nicht dargestellt) verschwenkbar ist. Der Schwenktisch 6 ist mit der Achse 7 an einem Formtisch 8 aufgenommen, der seinerseits mittels eines Hebelgetriebes 9 und einer Kurvenscheibe 10 in einer Führung 11 linear bewegbar ist.

Im vorliegenden Fall und gemäß Darstellung in den Zeichnungen sind der Schwenktisch 6 und der erste Werkzeughalter 3 als bauliche Einheit bzw. als dasselbe Bauteil ausgebildet. Bei anderen Ausführungsformen können der Werkzeughalter 3 und der Schwenktisch 6 aber auch als separate, aneinander festgelegte Bauteile ausgebildet sein.

Insgesamt bilden die genannten Komponenten (separater Motor, Schwenktisch 6, Achse 7, Formtisch 8, Hebelgetriebe 9, Kurvenscheibe 10, Führung 11) die Antriebsvorrichtung 5 für die Bewegung des ersten Werkzeugs 1 relativ zu dem zweiten Werkzeug 2 aus.

Bei einer nicht dargestellten, alternativen Ausführungsform können Formtisch und Schwenktisch auch über einen zentralen Antriebsmotor, z B mittels zusätzlicher Antriebskurve(n) und Schubstrebe(n), erfolgen.

Zum Zweck einer Stanztiefenverstellung ist zudem eine untere Achse 12 des Hebelgetriebes 9 über einen Aktuator 13 verstellbar gelagert. Da die gesamten Bewegungen einschließlich einer Stanztiefenverstellung vollständig über das Unterwerkzeug 1 geleistet werden, kann das Oberwerkzeug bzw. zweite Werkzeug 2 vollständig ortsfest gegenüber dem Maschinengestell montiert sein.

Ein Längenmesssensor 14 ist an dem Formtisch 8 so aufgenommen, dass eine Länge zwischen einem Punkt an dem Formtisch 8 und einem Punkt an dem Schwenktisch 6 bzw. dem ersten Werkzeughalter 3 gemessen wird. Die gemessene Raumrichtung liegt bei diesem Beispiel in der Vertikalen. Der Längenmesssensor ist seitlich zu der Achse 7 versetzt, so dass die Länge auch einen Verschwenkung des Schwenktisches 6 aus einer parallelen Position der Werkzeuge 1, 2 ermittelt. Aufgrund der Zwangsführung durch die Schwenkachse und aufgrund der Unveränderlichkeit des zweiten Werkzeugs 2 wird somit eine Parallelität der Werkzeuge 1, 2 durch den Längenmesssensor 14 ermittelt.

Im Detail ist der Längenmesssensor 14 als induktiver Sensor ausgebildet. Ein Sensorteil 15 ist an dem Formtisch angebracht. Eine elektrisch leitende Messfahne 16 ist als Gegenstück an dem Schwenktisch 6 bzw. dem ersten Werkzeughalter 3 oder auch - je nach Messaufgabe- unmittelbar an dem ersten Werkzeug 1 angebracht.

Fig. 1 zeigt dabei eine Schließposition des bewegten ersten Werkzeugs, in der die Messung stattfindet. In dieser Position beginnt die Thermoformung des Produkts, wobei ein der Formung folgender Stanzvorgang noch nicht abgeschlossen ist. Demnach haben die Werkzeuge 1, 2 bezüglich etwaiger weiterer Stummelführungen (nicht dargestellt) in der Schließposition noch insoweit ausreichendes Spiel, dass ein Schiefstand der Werkzeughälften zueinander möglich ist. Allerdings beginnt bei einem irregulären Schiefstand aber im Regelfall bereits ein Verschleiß/Abtrag der Stummelführungen und/oder der Werkzeugschneiden.

In dieser Schließposition gilt daher im Fall eines idealen Bewegungsverlaufs, dass die Werkzeuge 1, 2 vollständig parallel zueinander ausgerichtet sind. Eine nachfolgende Relativbewegung erfolgt nicht mehr als Verschwenkung um die Achse 7, sondern nur noch als mittels der Führung 11 sichergestellte Bewegung in der Hochrichtung. Wenn in dieser Schließposition (Fig. 1) eine Abweichung der parallelen Lage mittels des Längenmesssensors 14 über ein definiertes Toleranzmaß hinaus festgestellt wird, so ist eine verschleißarme Zustellung der Werkzeuge nicht mehr gewährleitstet und die Maschine muss einer Kontrolle unterzogen werden.

Im vorliegenden und besonders bevorzugten Fall ist die Messfahne 16 (oder auch der Sensorteil 15) unmittelbar an dem ersten Werkzeughalter 3 bzw. dem Schwenktisch 6 angeordnet ist. Dabei wird die Kontrolle der Genauigkeit der Antriebsvorrichtung 5, insbesondere betreffend einen Verschleiß des Schwenktisches 6 und der Achse 7, geleistet. Zudem bleibt die Justierung des Längenmesssensors in diesem Fall auch bei einem Werkzeugwechsel erhalten. Auch Einrichtfehler des auf dem Werkzeughalter montierten Werkzeugs 1 sind dabei messbar, da sie ebenso zu einem Schiefstand am Ort der Messung (Winkel des Schwenktisches) führen würden.

Alternativ hierzu kann die Messfahne 16 mit entsprechend genauer Zentrierung auch unmittelbar an dem ersten Werkzeug 1 angebracht sein.

Fig. 2 zeigt eine aufgeschwenkte oder offene Position des Schwenktisches, bei dem das erste Werkzeug 1 um etwa 80° um die Achse 7 verschwenkt wurde, um eine einfache und schnelle Übergabe der thermogeformten und ausgestanzten Produkte zu ermöglichen. In dieser offenen Position ist der Längenmesssensor 14 ohne Funktion.

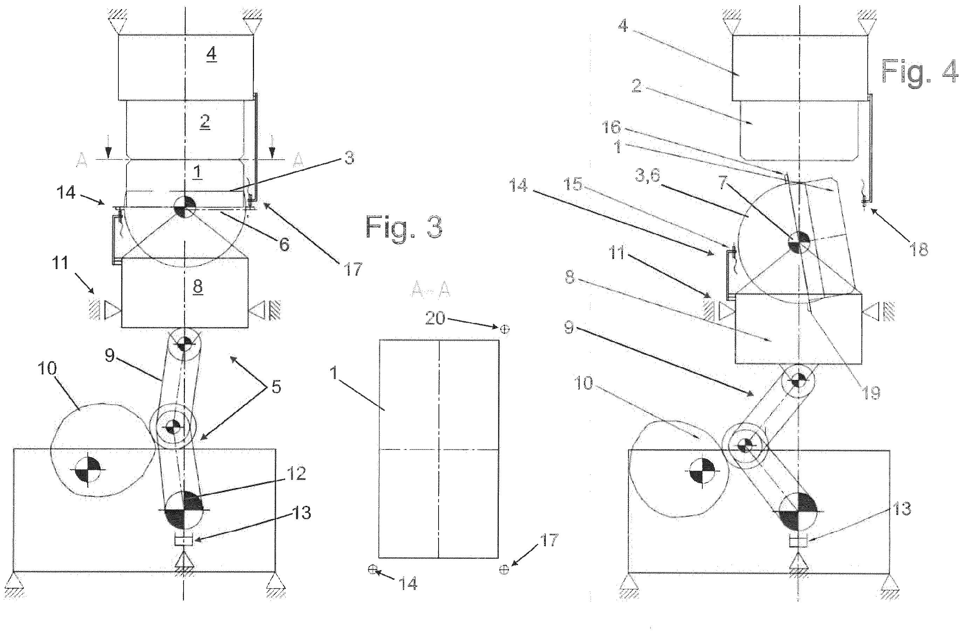

Bei dem in Fig. 3 und Fig. 4 gezeigten, zweiten Ausführungsbeispiel der Erfindung liegt dieselbe Vorrichtung wie im ersten Beispiel vor, wobei im Unterschied zum ersten Beispiel weitere Längenmesssensoren vorgesehen sind.

Zusätzlich zu dem vorstehend beschriebenen ersten Längenmesssensor 14 ist ein zweiter Längenmesssensor 17 vorgesehen, der unmittelbar eine Relativposition zwischen dem oberen, ortsfesten Werkzeughalter 4 und dem unteren, bewegten Werkzeughalter 3 misst. Vorliegend ist ein Sensorteil 18 des zweiten Längenmesssensors an dem oberen Werkzeughalter 4 angeordnet und eine Messfahne 19 ist an dem unteren Werkzeughalter 3 angeordnet.

Zudem ist ein dritter Längenmesssensor 20 (siehe Schnittansicht A-A) vorgesehen, der in der zur Zeichnungsebene senkrechten Raumrichtung bzw. parallel zu der Achse 7 in einer anderen Ebene angeordnet ist. Durch diesen Längenmesssensor 20 werden Verkippungen bzw. Schiefstände um eine in der Zeichnungsebene horizontale bzw. senkrecht zu der Achse 7 verlaufende Achse gemessen.

Insgesamt kann hierdurch eine besonders vollständige Überwachung der Ausrichtung bzw. Parallelität der Werkzeuge 1, 2 zueinander erreicht werden. Die weiteren Längenmesssensoren 17, 20 sind bevorzugt ebenfalls als induktive Sensoren ausgebildet. Je nach Anforderungen kann es sich bei den Längenmesssensoren 14, 17, 20 der Erfindung aber auch um andere Bauarten handeln wie etwa kapazitive Sensoren oder optische Sensoren, z.B. Lasersensoren. Insbesondere können die mehreren Längenmesssensoren 14, 17, 20 auch von gemischter Bauart sein.

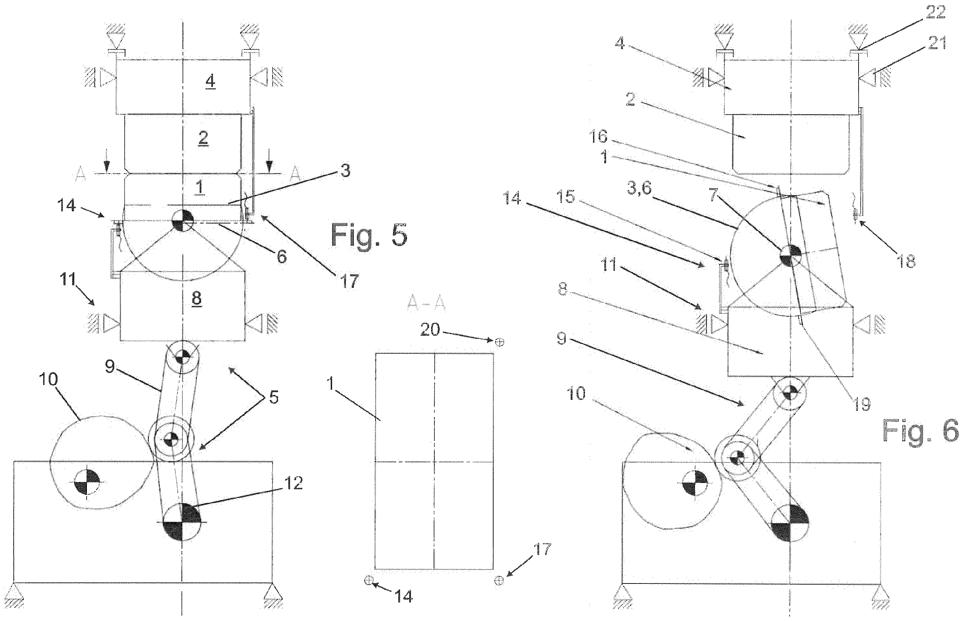

Bei dem dritten Ausführungsbeispiel nach Fig. 5 und Fig. 6 ist dieselbe Anordnung von drei Längenmesssensoren 14, 17, 20 wie im zweiten Ausführungsbeispiel vorgesehen. Im Unterschied zu dem zweiten Ausführungsbeispiel wird eine Stanztiefenverstellung bei der Vorrichtung des dritten Ausführungsbeispiels durch einen in der Hochrichtung verstellbaren zweiten Werkzeughalter 4 vorgenommen. Hierzu weist der zweite Werkzeughalter 4 eine Führung 21 und einen zwischen Maschinengestell und Werkzeughalter 4 angeordneten Aktuator 22 auf. Entsprechend ist an dem Hebelgetriebe 9 kein Aktuator vorgesehen.

### Bezugszeichenliste

- 1: erstes, bewegbares Werkzeug
- 2: zweites Werkzeug
- 3: erster Werkzeughalter
- 4: zweiter Werkzeughalter
- 5: Antriebsvorrichtung
- 6: Schwenktisch
- 7: Achse des Schwenktisches
- 8: Formtisch
- 9: Hebelgetriebe
- 10: Kurvenscheibe
- 11: Führung des Formtisches
- 12: untere Achse des Hebelgetriebes
- 13: Aktuator zur Stanztiefenverstellung
- 14: (erster) Längenmesssensor
- 15: Sensorteil
- 16: Messfahne
- 17: zweiter Längenmesssensor
- 18: Sensorteil
- 19: Messfahne
- 20: dritter Längenmesssensor
- 21: Führung
- 22: Aktuator zur Stanztiefenverstellung

## Patentansprüche

1. Vorrichtung zum Thermoformen, umfassend
ein erstes, in einem ersten Werkzeughalter (3) aufgenommenes Werkzeug (1) und
ein zweites, in einem zweiten Werkzeughalter (4) aufgenommenes Werkzeug (2),
wobei zumindest das erste Werkzeug (1) zur Durchführung eines Thermoformvorgangs über eine Antriebsvorrichtung (5) des ersten Werkzeughalters (3) relativ zu dem anderen Werkzeug (2) in eine Schließposition bewegbar ist,
**dadurch gekennzeichnet, dass** die Vorrichtung so ausgebildet ist,
dass die Schließposition des bewegbaren ersten Werkzeugs (1) über zumindest einen Längenmesssensor (14, 17, 20) in zumindest einer ersten Raumrichtung vermessen wird, dass der Längenmesssensor (14, 17, 20) einen Sensor umfasst, der in einem Intervall einen Positionswert für einen mit dem Werkzeug korrelierten Messpunkt liefert und dass die Raumrichtung so gewählt ist, dass aus der Messung durch den Längenmesssensor (14, 17, 20) ein Maß für eine Parallelität der Werkzeuge in der Schließposition resultiert.

2. Vorrichtung nach Anspruch 1, **dadurch gekennzeichnet, dass** die Schließposition einer Stanzposition entspricht, bevor ein thermogeformtes Werkstück mittels einer Schneide der Werkzeuge (1, 2) abgetrennt wird.

3. Vorrichtung nach einem der vorhergehenden Ansprüche, **dadurch gekennzeichnet, dass** über einen weiteren Längenmesssensor (17, 20) die Schließposition des bewegbaren Werkzeugs (1) in einer weiteren Raumrichtung gemessen wird.

4. Vorrichtung nach einem der vorhergehenden Ansprüche, **dadurch gekennzeichnet, dass** über den Längenmesssensor (17) die Schließposition des bewegbaren ersten Werkzeugs (1) relativ zu dem zweiten Werkzeug (2) gemessen wird.

5. Vorrichtung nach einem der vorhergehenden Ansprüche, **dadurch gekennzeichnet, dass** insgesamt wenigstens drei Längenmesssensoren (14, 17, 20) vorgesehen sind, die jeweils unabhängige Positionsbestimmungen des bewegbaren ersten Werkzeugs (1) in der Schließposition vornehmen.

6. Vorrichtung nach einem der vorhergehenden Ansprüche, **dadurch gekennzeichnet, dass** das erste Werkzeug (1) an einem um eine Achse (7) schwenkbaren Schwenktisch (6) angeordnet ist, wobei der Schwenktisch (6) an einem linear verschiebbar geführten Formtisch (8) aufgenommen ist.

7. Vorrichtung nach Anspruch 6, **dadurch gekennzeichnet, dass** durch den Längenmesssensor (14, 20) eine Position des Schwenktisches (6) relativ zu dem Formtisch (8) gemessen wird.

8. Vorrichtung nach einem der Ansprüche 6 oder 7, **dadurch gekennzeichnet, dass** das zweite Werkzeug (2) ebenfalls in seiner Position einstellbar justierbar ist, insbesondere zum Zweck einer Stanztiefenverstellung.

9. Vorrichtung nach einem der Ansprüche 1 bis 5, **dadurch gekennzeichnet, dass** die Vorrichtung als Flachbettmaschine ohne einen Schwenktisch ausgebildet ist.

10. Vorrichtung nach einem der vorhergehenden Ansprüche, **dadurch gekennzeichnet, dass** die Werkzeuge (1, 2) vor Erreichen der Schließposition mittels eng tolerierter Stummelführungen unmittelbar aneinander geführt sind.

11. Vorrichtung nach einem der vorhergehenden Ansprüche, **dadurch gekennzeichnet, dass** der Längenmesssensor (14, 17, 20) ausgewählt ist aus der Gruppe induktiver Sensor, kapazitiver Sensor und Laser-Sensor.

12. Verfahren zum Betrieb einer Vorrichtung nach einem der vorhergehenden Ansprüche, umfassend den Schritt:
Vermessen der Schließposition des bewegbaren ersten Werkzeugs (1) mittels des Längenmesssensors (14, 17, 20).

13. Verfahren nach Anspruch 12, **dadurch gekennzeichnet, dass** die Messung nach einem Werkzeugwechsel und vor einer Produktionsaufnahme erfolgt, um eine Lagegenauigkeit des gewechselten Werkzeugs zu prüfen.

14. Verfahren nach Anspruch 12 oder 13, **dadurch gekennzeichnet, dass** die Messung während einer Produktion mit der Vorrichtung erfolgt, um eine Lagegenauigkeit der Werkzeuge zu überwachen.

## Claims

1. A thermoforming device, comprising
a first mould (1) that is accommodated in a first mould holder (3) and
a second mould (2) that is accommodated in a second mould holder (4),
wherein at least the first mould (1) can be moved relative to the other mould (2) into a closed position by means of a driving device (5) of the first mould holder (3) in order to carry out a thermoforming process,
**characterized in**
**that** the device is realized in such a way that the closed position of the movable first mould (1) is mapped in at least a first direction in space by means of at least one length measuring sensor (14, 17, 20), in that the length measuring sensor (14, 17, 20) comprises a sensor, which in an interval delivers a position value for a measuring point correlated with the mould, and in that the direction in space is chosen such that a degree for a parallelism of the moulds in the closed position results from the measurement by means of the length measuring sensor (14, 17, 20).

2. The device according to claim 1, **characterized in that** the closed position corresponds to a punching position prior to the separation of a thermoformed workpiece by means of a blade of the moulds (1, 2).

3. The device according to one of the preceding claims, **characterized in that** the closed position of the movable mould (1) is measured in another direction in space by means of an additional length measuring sensor (17, 20).

4. The device according to one of the preceding claims, **characterized in that** the closed position of the movable first mould (1) is measured relative to the second mould (2) by means of the length measuring sensor (17).

5. The device according to one of the preceding claims, **characterized in that** at least three length measuring sensors (14, 17, 20) are collectively provided and respectively carry out independent position measurements of the movable first mould (1) in the closed position.

6. The device according to one of the preceding claims, **characterized in that** the first mould (1) is arranged on a swivel table (6) that can be swivelled about an axis (7), wherein the swivel table (6) is accommodated on a forming table (8) that is guided in a linearly displaceable manner.

7. The device according to claim 6, **characterized in that** the length measuring sensor (14, 20) measures a position of the swivel table (6) relative to the forming table (8).

8. The device according to one of claims 6 or 7, **characterized in that** the second mould (2) likewise is adjustable with respect to its position, particularly for the purpose of a punching depth adjustment.

9. The device according to one of claims 1 to 5, **characterized in that** the device is realized in the form of a flatbed machine without a swivel table.

10. The device according to one of the preceding claims, **characterized in that** the moulds (1, 2) are guided directly against one another by means of stub guides, which are subject to strict tolerances, prior to reaching the closed position.

11. The device according to one of the preceding claims, **characterized in that** the length measuring sensor (14, 17, 20) is selected from the group comprising inductive sensors, capacitive sensors and laser sensors.

12. A method for operating a device according to one of the preceding claims, comprising the step of:
mapping the closed position of the movable first mould (1) by means of a length measuring sensor (14, 17, 20) .

13. The method according to claim 12, **characterized in that** the measurement takes place after a mould change and prior to a production start in order to check a positional accuracy of the changed mould.

14. The method according to claim 12 or 13, **characterized in that** the measurement takes place during a production with the device in order to monitor a positional accuracy of the moulds.

## Revendications

1. Dispositif de thermoformage, comprenant
un premier outil (1) logé dans un premier porte-outil (3) et
un deuxième outil (2) logé dans un deuxième porte-outil (4),
sachant au moins que le premier outil (1) peut être déplacé pour exécution d'une opération de thermoformage dans une position de fermeture par un dispositif d'entraînement (5) du premier porte-outil (3) par rapport à l'autre outil (2),
**caractérisé en ce que**
le dispositif est constitué de telle sorte que la position de fermeture du premier outil mobile (1) est mesurée au moins par un capteur de mesure de longueur (14, 17, 20) dans au moins une première direction spatiale, **en ce que** le capteur de mesure de longueur (14, 17, 20) comprend un capteur qui fournit dans un intervalle une valeur de position pour un point de mesure en corrélation avec l'outil et **en ce que** la direction spatiale est choisie de telle manière qu'une cote résulte de la mesure par le capteur de mesure de longueur (14, 17, 20) pour un parallélisme des outils dans la position de mesure.

2. Dispositif selon la revendication 1, **caractérisé en ce que** la position de fermeture correspond à une position d'estampage, avant qu'une pièce thermoformée soit séparée au moyen d'une coupe des outils (1, 2).

3. Dispositif selon l'une quelconque des revendications précédentes, **caractérisé en ce que** la position de fermeture de l'outil mobile (1) est mesurée dans une autre direction spatiale par un autre capteur de mesure de longueur (17, 20).

4. Dispositif selon l'une quelconque des revendications précédentes, **caractérisé en ce que** la position de fermeture du premier outil mobile (1) est mesurée par rapport au deuxième outil (2) par le capteur de mesure de longueur (17).

5. Dispositif selon l'une quelconque des revendications précédentes, **caractérisé en ce qu'**au moins trois capteurs de mesure de longueur (14, 17, 20) sont prévus au total, qui procèdent respectivement à des déterminations de position indépendantes du premier outil mobile (1) dans la position de fermeture.

6. Dispositif selon l'une quelconque des revendications précédentes, **caractérisé en ce que** le premier outil (1) est disposé sur une table pivotante (6) pouvant pivoter autour d'un axe (7), sachant que la table pivotante (6) est logée sur une table de formage (8) guidée pouvant être déplacée de façon linéaire.

7. Dispositif selon la revendication 6, **caractérisé en ce qu'**une position de la table pivotante (6) est mesurée par rapport à la table de formage (8) par le capteur de mesure de longueur (14, 20).

8. Dispositif selon l'une quelconque des revendications 6 ou 7, **caractérisé en ce que** le deuxième outil (2) peut être également ajusté réglable dans sa position, en particulier dans le but d'un réglage de profondeur d'estampage.

9. Dispositif selon l'une quelconque des revendications 1 à 5, **caractérisé en ce que** le dispositif est constitué comme une machine à banc plat sans une table pivotante.

10. Dispositif selon l'une quelconque des revendications précédentes, **caractérisé en ce que** les outils (1, 2) sont guidés directement l'un à côté de l'autre au moyen de tronçons de guidage à tolérances serrées avant d'atteindre la position de fermeture.

11. Dispositif selon l'une quelconque des revendications précédentes, **caractérisé en ce que** le capteur de mesure de longueur (14, 17, 20) est choisi à partir du groupe :
capteur inductif, capteur capacitif et capteur au laser.

12. Procédé destiné à faire fonctionner un dispositif selon l'une quelconque des revendications précédentes, comprenant l'étape de :
mesure de la position de fermeture du premier outil mobile (1) au moyen du capteur de mesure de longueur (14, 17, 20).

13. Procédé selon la revendication 12, **caractérisé en ce que** la mesure a lieu après un changement d'outil et avant une réception de production pour vérifier une précision de position de l'outil changé.

14. Procédé selon la revendication 12 ou 13, **caractérisé en ce que** la mesure pendant une production a lieu avec le dispositif pour surveiller une précision de position des outils.
